(19) Europäisches Patentamt
European Patent Office
Office européen des brevets

(11) Veröffentlichungsnummer: **0 253 858 B1**

(12) **EUROPÄISCHE PATENTSCHRIFT**

(45) Veröffentlichungstag der Patentschrift:
10.04.91 Patentblatt 91/15

(51) Int. Cl.⁵: **B62B 15/00**

(21) Anmeldenummer: 87900798.7

(22) Anmeldetag: 21.01.87

(86) Internationale Anmeldenummer:
PCT/DE87/00023

(87) Internationale Veröffentlichungsnummer:
WO 87/04397 30.07.87 Gazette 87/17

(54) **SCHNEEGLEITER.**

(30) Priorität: 21.01.86 DE 3601607
08.02.86 DE 3604017

(43) Veröffentlichungstag der Anmeldung:
27.01.88 Patentblatt 88/04

(45) Bekanntmachung des Hinweises auf die
Patenterteilung:
10.04.91 Patentblatt 91/15

(84) Benannte Vertragsstaaten:
AT CH DE FR IT LI SE

(56) Entgegenhaltungen:
EP-A- 0 099 664
US-A- 2 735 690
US-A- 3 921 239
US-A- 3 937 482

(73) Patentinhaber: Maass, Freimut
Waiblinger Strasse 14
W-7000 Stuttgart 50 (DE)

(72) Erfinder: Maass, Freimut
Waiblinger Strasse 14
W-7000 Stuttgart 50 (DE)

(74) Vertreter: Schuster, Gregor, Dipl.-Ing. et al
Patentanwälte Schuster & Thul
Wiederholdstrasse 10
W-7000 Stuttgart 1 (DE)

**Beschreibung**

Die Erfindung geht aus von einem Schneegleiter nach der Gattung des Hauptanspruchs. Schneegleiter sind in vielfältiger Weise bekannt. Der häufigste Typ besteht aus einer Fahrzeugschale, an der zwei parallele Gleitkufen angeordnet sind und der in erster Linie dem Freizeitsport, nämlich als Rodelersatz, dient. Für die Lenkung dieser bekannten Schneegleiter haben sich zwei Systeme durchgesetzt. Beim einen System sind die beiden Kufen in Längsrichtung unterteilt, wobei der vordere Teil zur Änderung der Fahrtrichtung verstellbar ist. Beim anderen System sind rechts und links des Schneegleiters Reibhebel angeordnet, mit denen zur Fahrtrichtungsänderung in die Fahrbahn gegriffen wird. Der Nachteil des einen Systems besteht vor allem darin, daß die für die Lenkung erforderliche Vorrichtung, nämlich zur Verstellung der Kufen, verhältnismäßig aufwendig ist, so daß ein derartiger Schneegleiter teuer wird. Außerdem wird durch die Vorrichtung das Gewicht des Schneegleiters erhöht, was sich besonders nachteilig auf den Bergauf-Transport auswirkt. Nicht zuletzt ist eine derartige Vorrichtung empfindlich und entsprechend reparaturanfällig. Beim anderen System wird durch die Reibhebel die Fahrbahn beschädigt, so daß auf vielen Abfahrtspisten derartige Schneegleiter nicht zugelassen sind.

Ein bekannter Schneegleiter der gattungsgemäßen Art (EP 0 099 664) weist daher neben den beiden auf der Unterseite der Fahrzeugschale angeordneten parallelen Gleitkufen in Richtung auf den oberen Rand der Fahrzeugschale seitlich zu diesen versetzt angeordnete gebogene Kufen auf, um durch Gewichtsverlagerung des Fahrzeugfahrers eine Fahrtrichtungsänderung zu erzielen. Die geraden und die gebogenen Kufen erstrecken sich bei diesem Schneegleiter über die gesamte Länge des Fahrzeugbodens, so daß sie immer in Eingriff mit der Fahrbahn stehen. Dies hat jedoch den Nachteil, daß ähnlich wie bei einem gewöhnlichen Schlitten die Auflagefläche des Schneegleiters im Vergleich zur Bodenfläche gering ist, so daß der Schneegleiter tief in den Boden einsinkt. Dadurch besteht einerseits bei dünner Schneeauflage die Gefahr, daß der Schneegleiter mit dem Untergrund in Berührung kommt, wodurch sowohl Zerstörungen des Untergrundes als auch des Schneegleiters hervorgerufen werden, andererseits sinkt der Schneegleiter aufgrund der geringen Auflagefläche in weichem Schnee tief ein, wodurch der Reibungsverlust erhöht wird. Ein weiterer Nachteil dieses bekannten Schneegleiters besteht darin, daß er schwer zu bremsen ist. Zum Bremsen werden derartige Schneegleiter übersteuert, so daß, ähnlich wie beim Skilaufen, die Gleitkufen quer zur Fahrtrichtung gelangen. Ein derartiges Übersteuern ist bei dem bekannten Schneegleiter aufgrund der sich über den gesamten Fahrzeugboden erstreckenden Gleitkufen jedoch recht schwierig.

Aufgabe der Erfindung ist es daher, die Lenk- und Bremsbarkeit gattungsgemäßer Schneegleiter zu erhöhen und gleichzeitig die Reibungsverluste durch die Lenkungseinrichtung zu verringern.

Diese Aufgabe wird erfindungsgemäß durch einen gattungsgemäßen Schneegleiter mit den kennzeichnenden Merkmalen des Hauptanspruchs gelöst, der gegenüber den bekannten Schneegleitern den Vorteil hat, daß aufgrund des glatt verbleibenden Abschnitts des Fahrzeugbodens durch einfache Gewichts-verlagerung des Fahrzeugfahrers eine gut dosierbare Fahrtrichtungsänderung erzielbar ist. Durch die zur Senkrechten geneigten gewölbten Kufen wird ähnlich wie beim Ski eine Richtungsänderung erzielt. Durch die bei Geradeausfahrt senkrecht zur Piste stehenden parallel angeordneten gebogenen Kufen ist Spurtreue gegeben. Bei Gewichtsverlagerung und somit Schräglage der gebogenen Mittelkufe gelangt eine noch stärker gebogene seitlich zu der Mittelkufe angeordnete Seitenkufe oder mehrere Seitenkufen in Eingriff, so daß eine Kurvenführung des Schneegleiters stattfindet und zwar zunehmend, je stärker die Gewichtsverlagerung und damit die Seitenlage ist, da der Eingriff der stärker gekrümmten Kufen mit der Schräglage zunimmt.

Vorteilhafterweise erfolgt diese Richtungssteuerung ohne unnötigen Reibverlust zur Fahrbahn hin, so daß besonders bei schnellen Abfahrten bei Richtungsänderung keine Geschwindigkeitseinbußen entstehen. Durch Verlagerung des Schwerpunktes in den Übergangsbereich zwischen glattem Bodenabschnitt und mit Kufen versehenem Bodenabschnitt kann die Intensität des Eingriffs der Kufen in die Fahrbahn durch Gewichtsverlagerung parallel zur Fahrtrichtung so gewählt werden, daß bei minimaler Reibung ein maximaler Steuereffekt erzielt wird. Zudem ist in diesem Bereich die seitliche Neigung des Schneegleiters durch Gewichtsverlagerung senkrecht zur Fahrtrichtung stufenlos wählbar.

Bei Geradeausfahrt kann bei dem erfindungsgemäßen Schneegleiter die Hauptauflagefläche nahezu vollständig in diesem glatten Bodenbereich liegen, während nur ein kleiner Abschnitt der Kufen mit der Fahrbahn in Eingriff steht. Dadurch ist ein minimaler Reibungswert bei gleichzeitig guter Lenkbarkeit des Schneegleiters erzielbar. Außerdem wird auch die Fahrbahn nicht beschädigt und es ist aufgrund der großflächigen Auflage ein Fahren in weichem Schnee ohne tieferes Einsinken möglich.

Hinzu kommt, daß bei Richtungsänderungen durch Verlagerung des Schwerpunktes, wie es erfindungsgemäß der Fall ist, der Fahrer des Fahrzeugs wesentlich kontrollierter arbeiten kann, da er in der Schwerpunktsebene verbleibt. So besteht beim erfinderischen Schneegleiter auch nicht die Gefahr, daß er bei hoher Kurvengeschwindigkeit und damit hoher Zentrifugalkraft kippt, sondern er rutscht auf den gerade im Eingriff stehenen Kufen innerhalb der geplanten Kurve. Die Fahrzeugschale, an der die Kufen angeordnet sind, kann irgendeine zur Fahrbahn hin gewölbte Raumform aufweisen, insbesonders mit einem länglichen waagrechten Querschnitt. Dieser Querschnitt kann beispielsweise aber auch kreisförmig sein oder eine sonstige Form aufweisen.

Es ist zwar ein Schneegleiter bekannt (US 3,937,482), bei dem auf der Außenseite der Fahrzeugschale ein kurvenfreier Bereich vorhanden ist. Der kurvenfreie Bereich befindet sich bei diesem Schneegleiter jedoch nicht in der Bodenfläche, sondern an der Rückwand der Fahrzeugschale. Bei dieser Ausgestaltung ist es ausgeschlossen, daß eine Gewichtsverlagerung auf den glatten Bereich erfolgt, um den oben beschriebenen Effekt zu erzielen. Hinzu kommt, daß dieser Schneegleiter dafür vorgesehen ist, von einem Zugfahrzeug gezogen zu werden, es sich also um einen Zugschlitten handelt und nicht um einen Selbstfahrerschlitten wie bei dem erfindungsgemäßen Schneegleiter. Eine Gewichtsverlagerung, um den Schneegleiter der Fahrtrichtung des Zugfahrzeugs nachzulenken, ist nur senkrecht zur Fahrtrichtung vorgesehen, da sich der Schwerpunkt des Schneegleiters einschließlich der Insassen immer senkrecht oberhalb des Angriffspunktes der Zugkraft befinden muß, um eine einwandfreie Funktion des Schneegleiters zu gewährleisten.

Gebremst wird der erfindungsgemäße Schneegleiter durch Übersteuern der Kurve, indem wie beim Skifahren, eine starke Gewichtsverlagerung vorgenommen wird, so daß die Kufen quer zur Fahrtrichtung in Eingriff gelangen. Dabei kann durch Verlagerung des Hauptgewichts auf den glatten Abschnitt des Fahrzeugbodens eine schnelle Drehung des Schneegleiters erzielt werden.

Zur Verstärkung dieser Brems- oder Steuerwirkung können, falls erforderlich, durch Eingriff in die Fahrbahn bzw. den Schnee die Hände oder auch kurze, beispielsweise 20 cm lange Skistöcke dienen, so daß die damit erzeugten entgegen der Fahrtrichtung einseitig wirkenden Kräfte einen Kurvensteuereffekt ausüben. Bei ebener Fahrbahn können diese Stöcke, ähnlich wie beim Skilaufen, zum Anschieben des Schneegleiters dienen.

Um den Transport des Schneegleiters besonders auf den Berg hinauf zu vereinfachen, ist an der Fahrzeugschale eine Vorrichtung zum Abschleppen vorhanden. Diese Vorrichtung kann beispielsweise aus einer mit der Schale verbundenen Öse und einem Seil bestehen. Beim Liften kann für den Transport des Schneegleiters ein Lifthorn in das Einstiegsloch des Schneegleiters gesteckt werden, wobei aufgrund des verhältnismäßig weit hinter dem Zugpunkt liegenden Schwerpunktes des Schneegleiters dieser gut in der Liftspur geführt wird. Als Vorrichtung kann auch ein schwenkbarer Zugbügel dienen, der zum Schleppen des Schneegleiters insbesondere nach vorne ausgerichtet ist. Ein solcher Zugbügel kann auch als Überrollbügel oder aber als Bugverstärkung dienen und in einer jeweils gewünschten Lage arretiert werden.

Nach einer weiteren Ausgestaltung der Erfindung können außen an den Seitenwänden vorzugsweise im Bereich des Schwerpunkts ein in der jeweiligen Seitenlage gleithemmend wirkende Vorrichtung vorhanden sein. Diese gleithemmende Vorrichtung bewirkt eine einseitige Gleithemmung, die sich als Kurvensteuerung auswirkt. Diese Vorrichtung kann in verschiedenster Art ausgebildet sein, beispielsweise als Perforierung, als Rutschhemmer oder aber als Auswölbung aus der Seitenwand.

Weitere Vorteile und vorteilhafte Ausgestaltungen der Erfindung sind der nachfolgenden Beschreibung, der Zeichnung und den Ansprüchen entnehmbar.

Zeichnung

Ein Ausführungsbeispiel des Gegenstandes der Erfindung ist mit Varianten in der Zeichnung dargestellt. Es zeigen :
Fig. 1 einen kanuförmigen Schneegleiter in der Seitenansicht ;
Fig. 2 einen Querschnitt nach Linie II-II in Fig. 1b;
Fig. 3 eine Bodenansicht III in Fig. 1a ;
Fig. 4 eine Ansicht von vorne einer Variante des in den Fig. 1 und 3 dargestellten Beispiels ;
Fig. 5 eine Seitenansicht einer anderen Variante entsprechend Fig. 1a, bei der der Boden abschnallbar ist und
Fig. 6-9 eine weitere Variante in verschiedenen Ansichten.

Beschreibung des Ausführungsbeispiels

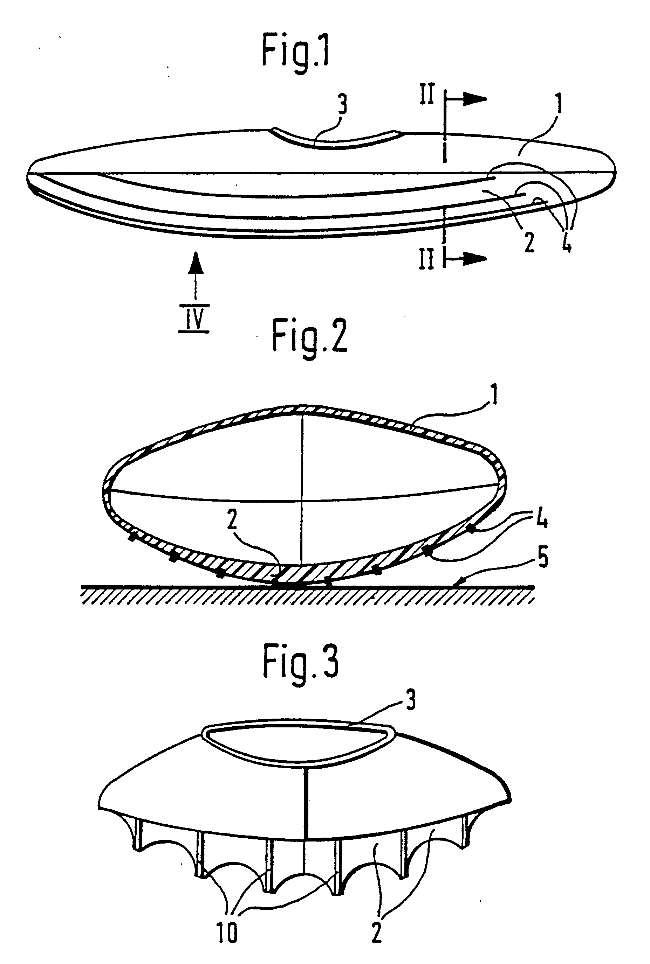

In den Fig. 1, 2 und 3 ist ein Kanu in verschiedenen Darstellungen gezeigt, das als Schneegleiter verwendet wird. Dieses Kanu weist eine Fahrzeugschale 1 auf, die einen Boden 2 hat und in der für den Fahrzeugfahrer ein Einstiegsloch 3 vorgesehen ist, wie nicht näher dargestellt, eine Sitzgelegenheit vorgesehen, ebenso wie es bei Kanus üblich ist. Am Boden 2 des Kanus sind in Längsrichtung nebeneinander angeordnete Kufen 4 vorhanden, auf denen der Schneegleiter zur Fahrbahn hin abgestützt ist, so daß je nach Schräglage der Fahrzeugschale nur ein Teil dieser Kufen nach Länge und Anzahl im Eingriff ist. Diese Kufen 4 sind am Boden 2 im hinteren Teil des Bootes nicht bis zum Ende geführt, sondern hören vorher auf, so daß ein hinterer glatter Bereich des Bodens 2 verbleibt. Dies ist besonders Fig. 2 entnehmbar, bei der die Fahrbahn mit 5 bezeichnet ist. Die Kufen 4 sind bei dieser Variante als in den Boden 2 angelassene Schienen ausgebildet.

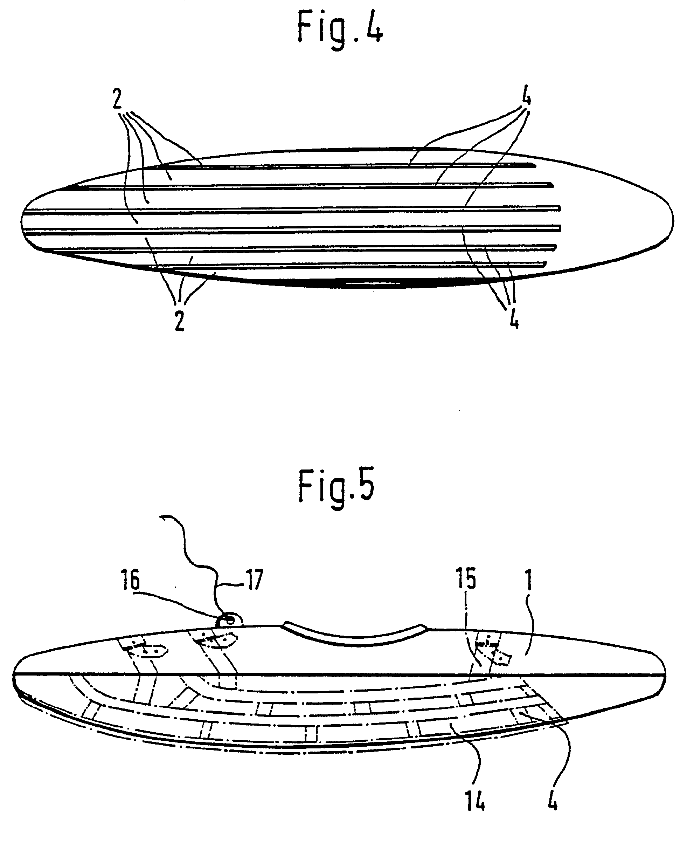

In Fig. 4 ist eine Variante dieses Schneegleiters dargestellt, bei der die Kufen als Erhebungen 10 in den Boden 2 eingeformt sind. Auf diese Weise kann einerseits die Schneegriffigkeit verbessert werden, indem der Abstand von der Kufenunterkante bis zum Boden 2 vergrößert wird und es kann andererseits auf die Verwendung von zusätzlichen Schienen verzichtet werden, wenn es sich um einen Kunststoff handelt, der hart genug ist.

Bei der in Fig. 5 dargestellten Variante ist der Boden 14, der ebenfalls Kufen 4 aufweist, lösbar mit der Fahrbahnschalte 1 verbunden, wobei die Verbindung über Riemen 15 erfolgt. Auf diese Weise ist es möglich, das Kanu, bzw. die Fahrzeugschale, im Sommer für den Wasserbetrieb zu verwenden und im Winter für den Schneegleiter.

Wie auch bei der obenbeschriebenen Variante möglich, ist an der Fahrzeugschale 1 eine Öse 16 vorgesehen mit einer Schnur 17, um dadurch das Fahrzeug schleppen zu können.

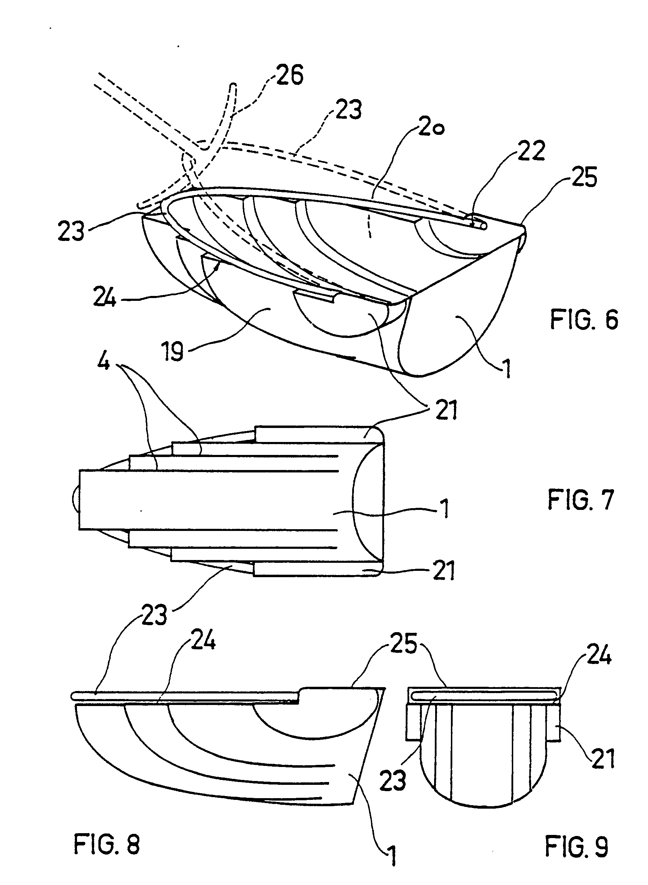

In den Figuren 6 bis 9 ist eine weitere Variante dargestellt mit einer verhältnismäßig kurzen kompakten Fahrzeugschale 1, an deren Seitenwänden 19 und 20 nach außen gehende Auswölbungen 21 vorhanden sind. An den Köpfen dieser Auswölbungen 21 sind Drehgelenke 22 vorgesehen, an denen ein Bügel 23 über die Öffnung der Fahrzeugschale 1 schwenkbar angelenkt ist. Während im vorderen Teil der Fahrzeugschale 1 die Bordkante 24 verhältnismäßig niedrig ausgebildet ist, ist die Bordkante 25 im Bereich hinter den Auswölbungen 21 weiter hochgezogen. Sie bietet dadurch dem Fahrer Schutz und Halt.

Die Auswölbungen 21 greifen in extremer Schräglage des Schneegleiters in den Schnee und bewirken eine Bremshemmung mit der Folge einer verstärkten Kurvenfahrt um die jeweils in den Schnee greifende Auswölbung 21. Außerdem werden die Seitenwände 19 und 20 der Fahrzeugschale 1 durch diese Auswölbung 21 versteift.

In der in Fig. 6 gezeigten perspektivischen Darstellung des Schneegleiters ist der Zugbügel 23, der im übrigen jeweils nach vorne geschwenkt gezeigt ist, hier gestrichelt leicht nach oben geschwenkt dargestellt, wobei ein Bügel 26 eines Schleppliftes beispielhaft im Eingriff ist. Bei der in den Figuren 6 bis 9 gezeigten nach vorne gerichteten Schwenkstellung – Ruhestellung – bildet dieser Bügel 23 einen Bugschutz und ist in dieser Stellung arretierbar. Die Arretierung kann entweder durch ein Rastersystem im Bereich des Gelenks 22 erreicht werden oder durch eine sonstige, nicht dargestellte Einrichtung. Der Bügel kann aber auch als Überrollbügel dienen oder aber auch als Griff für den Fahrer.

In Fig. 7 ist die Fahrzeugschale von unten dargestellt, in Fig. 8 von der Seite und in Fig. 9 von vorne. Wie besonders Fig. 7 entnehmbar ist, sind hier die Kufen kantig ausgebildet und quer zur Fahrtrichtung kantig ausgebildet, wodurch je nach Schräglage sich verstärkende Griffigkeit gegeben ist.

## Ansprüche

1. Schneegleiter mit einer mindestens zwei in Fahrtrichtung verlaufende Kufen aufweisenden, mindestens eine Person aufnehmenden Fahrzeugschale (1) und mit einem zur Fahrbahn (5) hin gewölbten Boden (2), an dem die Kufen (4, 10) angeordnet sind, dadurch gekennzeichnet, daß die Kufen (4) nur bis zu einem glatt verbleibenden Abschnitt des Bodens (2) vorgesehen sind, welcher bezüglich der Fahrtrichtung hinter dem Schwerpunkt des Schneegleiters liegt.

2. Schneegleiter nach Anspruch 1, dadurch gekennzeichnet, daß die Kufen (4) als Einzelschienen in ein Bodenelement (2) eingelassen sind.

3. Schneegleiter nach Anspruch 1, dadurch gekennzeichnet, daß die Kufen (10) aus dem Boden (2) herausgeformt sind.

4. Schneegleiter nach Anspruch 3, dadurch gekennzeichnet, daß die Kufen kantig ausgebildet sind und quer zur Fahrtrichtung gesehen stufenförmig verlaufen.

5. Schneegleiter nach einem der vorhergehenden Ansprüche, dadurch gekennzeichnet, daß an der Fahrzeugschale (1) eine Vorrichtung (16, 17) für das Schleppen des Schneegleiters vorhanden ist.

6. Schneegleiter nach einem der vorhergehenden Ansprüche, dadurch gekennzeichnet, daß außen an den Seitenwänden (19, 20) vorzugsweise im Bereich des Schwerpunktes in extremen Seitenlagen gleithemmend greifende Vorrichtungen (21) vorhanden sind.

## Claims

1. Snow glider having at least two runners running in the the direction of travel, a vehicle capsule (1) to accomodate at least one person and, on the side facing the ground (5), a rounded bottom (2) on which runners (4, 10) are located, characterized by the runners (4) only extending as far as a portion of the bottom (2) that remains flat and that is to the rear of the snow glider's the center of mass relative to the direction of travel.

2. Snow glider in accordance with Claim 1, characterized by the runners (4) being in the form of individual bars let into a bottom element (2).

3. Snow glider in accordance with Claim 1, characterized by the runners (10) being formed out of the bottom (2).

4. Snow glider in accordance with Claim 3, characterized by the runners being square edged and by their being stepped as viewed crosswise to the direction of travel.

5. Snow glider in accordance with one of the previous claims characterized by the vehicle capsule (1) being provided with a towing means (16, 17) with whose aid the snow glider can be towed.

6. Snow glider in accordance with one of the previous claims characterized by slide-resistant devices (21) being provided on the extreme outer surface of the side walls (19, 20), preferably in the region of the center of mass.

## Revendications

1. Glisseur de neige avec au moins deux patins dirigés dans le sens du déplacement, un siège (1) de véhicule pouvant au moins recevoir une personne et un fond (2) incurvé vers la trajectoire (5), auquel sont adaptés les patins (4, 10), se distinguant par un segment lisse équipant le fond (2), qui se trouve à l'arrière du centre de gravité du glisseur de neige vu dans le sens du déplacement.

2. Glisseur de neige conforme aux exigences 1, se distinguant par l'intégration des patins individuels (4) dans un élément du fond (2).

3. Glisseur de neige conforme aux exigences 1, se distinguant par le formage des patins (10) dans le fond (2).

4. Glisseur de neige conforme aux exigences 3, se distinguant par le formage des patins en angle et leur disposition étagère transversalement par rapport au sens de déplacement.

5. Glisseur de neige conforme à l'une des exigences précédentes, se distinguant par l'équipement du siège (1) d'un équipement (16, 17) pour le remorquage du glisseur de neige.

6. Glisseur de neige conforme à l'une des exigences précédentes, se distinguant par l'équipement à l'extérieur des parois latérales (19, 20) de préférence dans la zone du centre de gravité par des dispositifs de freinage (21).

# Fig.1

# Fig.2

# Fig.3

# Fig.4

# Fig.5

FIG. 6

FIG. 7

FIG. 8

FIG. 9